# FASCICULE DE BREVET EUROPEEN

(11) **EP 3 760 506 B1**
(45) Date de publication et mention de la délivrance du brevet: **16.02.2022**
(21) Numéro de dépôt: 20181121.3
(22) Date de dépôt: 19.06.2020
(51) Int. Cl.: B60W 40/06, G08G 1/01, G08G 1/0962, H04W 4/02, H04W 4/40, H04W 4/44, B60W 50/14

(54) **PROCEDE DE CARACTERISATION DE L'ETAT D'UNE ROUTE**
VERFAHREN ZUR CHARAKTERISIERUNG DES ZUSTANDS EINER FAHRBAHN
METHOD FOR CHARACTERISING THE STATE OF A ROAD

(30) Priorité: 28.06.2019 FR 1907076
(43) Date de publication de la demande: 06.01.2021
(73) Titulaire: IFP Energies nouvelles, 92852 Rueil-Malmaison Cedex (FR)
(72) Inventeur: JEAN, Maxime, 92852 RUEIL-MALMAISON CEDEX (FR); CHASSE, Alexandre, 92852 RUEIL-MALMAISON CEDEX (FR)

(56) Documents cités:
- JP-A- 2017 223 640
- US-A1- 2012 053 805
- US-A1- 2016 245 648
- GIACOMO ALESSANDRONI ET AL: "A Study on the Influence of Speed on Road Roughness Sensing: The SmartRoadSense Case", SENSORS, vol. 17, no. 2, 7 février 2017 (2017-02-07), page 305, XP055681383, DOI: 10.3390/s17020305

## Description

### Domaine technique

La présente invention concerne la caractérisation de l'état d'une route.

Les routes peuvent présenter des aspérités, certaines peuvent être dues à des dégradations, telles que des trous, des nids de poule, des bosses, etc., d'autres peuvent être dues à la réalisation de la route : pavés, marquage au sol, etc. Ces aspérités ont un impact fort sur le confort et la sécurité des usagers de la route, en particulier pour les bicyclettes.

Pour ces usagers de la route, il devient alors utile de déterminer quelles sont les routes les plus confortables et les plus sûres, afin d'adapter leur trajet.

Pour les pouvoirs publics (par exemple gestionnaire de la voirie) et les entreprises de travaux publics, il est également utile de surveiller l'état des routes, et le cas échéant de prévoir des travaux de réparation et/ou de maintenance. Dans un tel cas, l'information relative à la caractérisation de la route peut être liée à une information relative à la fréquentation de la route.

### Technique antérieure

Seules deux solutions de surveillance de la qualité du réseau routier sont actuellement disponibles : les relevés qualitatifs ou les relevés quantitatifs. Les relevés qualitatifs sont effectués par des agents spécifiquement déployés à cette fin ou par le biais d'une remontée spontanée d'informations par des usagers affectés par l'état de la route. Les relevés quantitatifs sont quant à eux coûteux, peu fréquents, limités dans l'espace et complexes à interpréter. Ces relevés quantitatifs peuvent être réalisés notamment par une camionnette équipée de capteurs de grandeurs physiques et/ou de caméras dirigés vers la route. De tels relevés, sont donc ponctuels et la fréquence de la surveillance est faible.

La demande de brevet US 9,108,640 décrit une méthode de surveillance de la qualité de la route. Cette méthode est seulement adaptée aux véhicules automobiles, et est complexe à mettre en oeuvre : il est nécessaire de se connecter au calculateur du véhicule. De plus, il s'agit d'une approche séquentielle : un capteur peut éventuellement être calibré en fonction des mesures moyennes de la communauté avant d'envoyer ses mesures et de les intégrer à la moyenne générale. Il en résulte que l'ordre des trajets est pris en compte dans cette approche séquentielle, ce qui rend cette approche peu générale et peu robuste.

La demande de brevet US 2017/0167088 décrit une méthode de détermination de la qualité de la route par une analyse liée au système de suspension de véhicules. Ainsi, la détermination de la qualité de la route nécessite des capteurs précis installés directement sur le véhicule. Ce procédé est donc dépendant du véhicule et est difficilement adaptable pour une bicyclette.

La demande de brevet US 2018/0105206 décrit une méthode de détermination des propriétés de la route au moyen notamment de la vitesse des roues, de mesures de vitesse et d'accélération, et de mesures de la force sur la crémaillère de direction. Ainsi, la détermination de la qualité de la route nécessite de nombreux capteurs précis installés directement sur le véhicule. Ce procédé est donc dépendant du véhicule et n'est pas adaptable pour une bicyclette.

La demande de brevet WO 2017/208264 décrit un système de mesure de l'état de la route. Ce système semble spécifique au véhicule automobile, et ne permet pas une application pour d'autre type d'usager de la route, tels que des bicyclettes ou des deux-roues motorisées.

La demande de brevet JP 2017 223640 A divulgue un procédé de caractérisation de l'état d'une route lors d'un trajet parcouru par un usager de ladite route utilisant un véhicule comprenant la mesure de la position et la vitesse dudit usager au moyen d'un capteur de géolocalisation et une détermination des vibrations engendrées par les aspérités de ladite route à partir de la mesure de l'accélération dudit usager de la route selon les trois axes d'un accéléromètre trois axes.

### Résumé de l'invention

Le but de l'invention est de s'abstraire du biais des relevés qualitatifs tout en proposant une qualification des routes, quantifiée, objective, exhaustive, dynamique, robuste, peu onéreuse et adapté à tous types d'usagers de la route. Pour cela, l'invention concerne un procédé de caractérisation d'une route pour au moins un trajet parcouru par au moins un usager de la route, au moyen de capteurs simples et répandus : un accéléromètre trois axes et un capteur de géolocalisation. Le procédé met en œuvre une étape de mesure, une étape de traitement de mesures pour s'affranchir des effets liés à la vitesse de l'usager de la route pour déterminer les vibrations dues aux aspérités de la route, et une analyse des vibrations déterminées pour caractériser l'état de la route.

L'invention concerne un procédé de caractérisation de l'état d'une route lors d'un trajet parcouru par un usager de ladite route utilisant un véhicule, au moyen d'un accéléromètre trois axes et d'un capteur de géolocalisation. Pour ce procédé, on met en œuvre les étapes suivantes :
a) Pendant ledit trajet, on mesure l'accélération dudit usager de la route selon les trois axes au moyen dudit accéléromètre trois axes et on mesure la position et la vitesse dudit usager de la route au moyen dudit capteur de géolocalisation ;
b) On détermine des vibrations engendrées par les aspérités de ladite route en s'affranchissant pour lesdites mesures d'accélération de l'effet de la vitesse de déplacement dudit usager de la route de la manière suivante :
   i) lorsque ledit usager de la route utilise une bicyclette, on détermine lesdites vibrations au moyen desdites mesures d'accélération pour une plage de vitesse prédéterminée ;
   ii) lorsque ledit usager de la route utilise un véhicule automobile ou un deux-roues motorisé, on détermine lesdites vibrations par division desdites mesures d'accélération par une ligne de base fonction de la vitesse dudit usager de la route ; et
c) On caractérise l'état de la route par une analyse desdites vibrations déterminées. Selon un mode de réalisation, lequel ledit accéléromètre trois axes et ledit capteur de géolocalisation sont intégrés dans un téléphone intelligent.

Avantageusement, ladite plage de vitesse prédéterminée est comprise entre 15 et 30 km/h, et de préférence entre 16 et 26 km/h.

De manière avantageuse, ladite ligne de base est obtenue au moyen des mesures dudit trajet dudit usager de la route.

Conformément à une mise en œuvre, on caractérise l'état de la route par tronçon de route dudit trajet.

Selon un aspect, on caractérise l'état de la route au moyen d'une distribution desdites vibrations déterminées sur chaque tronçon de route dudit trajet.

Conformément à un mode de réalisation, on répète les étapes a) et b) pour une pluralité de trajets et/ou pour une pluralité d'usagers de ladite route, et pour chaque tronçon de route commun parcouru, on caractérise l'état de la route par fusion desdites vibrations déterminées pour ladite pluralité de trajets.

Avantageusement, on réalise ladite fusion des vibrations déterminées par une calibration desdits trajets, de préférence la calibration desdits trajets est une méthode d'optimisation symétrique par ordre chronologique de réalisation desdites trajets.

Selon une caractéristique, on stocke lesdites mesures dans une base de données.

De manière avantageuse, on stocke lesdites mesures par agrégation des mesures pour une fenêtre temporelle prédéfinie, ladite fenêtre temporelle prédéfinie étant de préférence comprise entre 0.05s et 0.25s.

De préférence, lesdites données agrégées dans ladite fenêtre temporelle prédéfinie comportent au moins une composante : une composante de vibration correspondant à la somme des trois variances des mesures des accélérations sur les trois axes dudit accéléromètre trois axes.

Selon une option de réalisation, on détermine ledit véhicule au moyen desdites mesures. Selon un mode de réalisation, on affiche ladite caractérisation de l'état de la route sur une carte routière, de préférence au moyen d'un téléphone intelligent, ou d'un système informatique.

D'autres caractéristiques et avantages du procédé selon l'invention, apparaîtront à la lecture de la description ci-après d'exemples non limitatifs de réalisations, en se référant aux figures annexées et décrites ci-après.

### Liste des figures

La figure 1 illustre les étapes du procédé selon un premier mode de réalisation de l'invention.
La figure 2 illustre les étapes du procédé selon un deuxième mode de réalisation de l'invention.
La figure 3 illustre les étapes du procédé selon un troisième mode de réalisation de l'invention.
La figure 4 illustre des fonctions de répartition et les densités de probabilité des mesures d'accélération verticale sur différents tronçons de route.
La figure 5 illustre un exemple de graphe formé par deux trajets ayant un tronçon commun.
La figure 6 illustre un exemple de graphe formé par deux trajets ayant deux tronçons communs.
La figure 7 illustre un exemple de graphe formé par cinq trajets ayant une pluralité de tronçons communs.

### Description des modes de réalisation

La présente invention concerne un procédé de caractérisation de l'état d'une route, parcouru par au moins un usager de la route lors d'un trajet. L'état de la route, également appelé qualité de la route, est représentatif des aspérités de la route qui peuvent être dues à des dégradations, telles que des trous, nids de poule, des bosses, etc., ou dues à la réalisation de la route : pavés, marquage au sol, etc. Selon l'invention, le procédé de caractérisation peut déterminer un paramètre représentatif de l'état de la route. Par exemple, il peut s'agir d'une note définie de telle sorte que si la note est élevée la route présente de nombreuses aspérités (route de mauvaise qualité), et si la note est faible la route présente peu d'aspérités (route de bonne qualité).

On appelle usager de la route, un utilisateur d'un véhicule circulant sur la route. Il peut s'agir notamment d'une bicyclette, d'un véhicule automobile, d'un deux-roues motorisé, ou tout autre moyen de transport analogue.

Le procédé selon l'invention met en oeuvre deux capteurs : un accéléromètre trois axes (c'est-à-dire un capteur mesurant l'accélération selon trois directions orthogonales) et un capteur de géolocalisation, tel qu'un capteur de positionnement par satellite, tel que le système GPS (de l'anglais Global Positioning System), le système Galileo, etc. L'accéléromètre trois axes permet d'avoir une mesure de l'accélération verticale de l'usager (cette accélération verticale étant liée à l'état de la route), quelle que soit la position de l'accéléromètre. Le capteur de géolocalisation permet de déterminer la position et la vitesse de l'usager de la route, afin de déterminer l'emplacement de la mesure d'accélération. Ces deux capteurs présentent l'avantage d'être répandus, peu coûteux et simples à mettre en œuvre. De préférence, le procédé selon l'invention utilise uniquement ces deux capteurs : un accéléromètre trois voies et un capteur de géolocalisation.

Le capteur de géolocalisation et l'accéléromètre trois axes peuvent, avantageusement, être inclus dans un téléphone portable, du type téléphone intelligent (de l'anglais « Smartphone »). Ainsi, il est possible de réaliser des mesures de manière simple, avec un grand nombre d'utilisateurs. En effet, quasiment tous les téléphones intelligents sont équipés de ces deux capteurs. De plus, l'utilisation d'un téléphone intelligent permet de réaliser la caractérisation de l'état de la route de manière indépendante du véhicule, et pour tous types de véhicule de l'usager de la route, en particulier pour une bicyclette.

Selon l'invention, le procédé de caractérisation de l'état de de la route comporte les étapes suivantes :
1) Mesures de l'accélération, de la position et de la vitesse
2) Détermination des vibrations
3) Caractérisation de l'état de la route

Ces étapes peuvent être mises en œuvre par des moyens informatiques. Selon un exemple de réalisation, l'étape 1) peut être réalisée au moyen d'un téléphone intelligent, et les étapes 2) et 3) peuvent être mises en œuvres au moyen d'un système informatique comprenant un serveur, celui-ci pouvant être dans un nuage informatique (de l'anglais « cloud »). Le téléphone intelligent est alors en communication avec le serveur. Cette configuration permet de se libérer des contraintes de faible puissance de calcul des téléphones intelligents. Les étapes seront détaillées dans la suite de la description.

L'étape 1) est réalisée de manière continue pendant le trajet de l'usager de la route. Les étapes 2) à 3) peuvent être réalisées de préférence après le trajet de l'usager de la route.

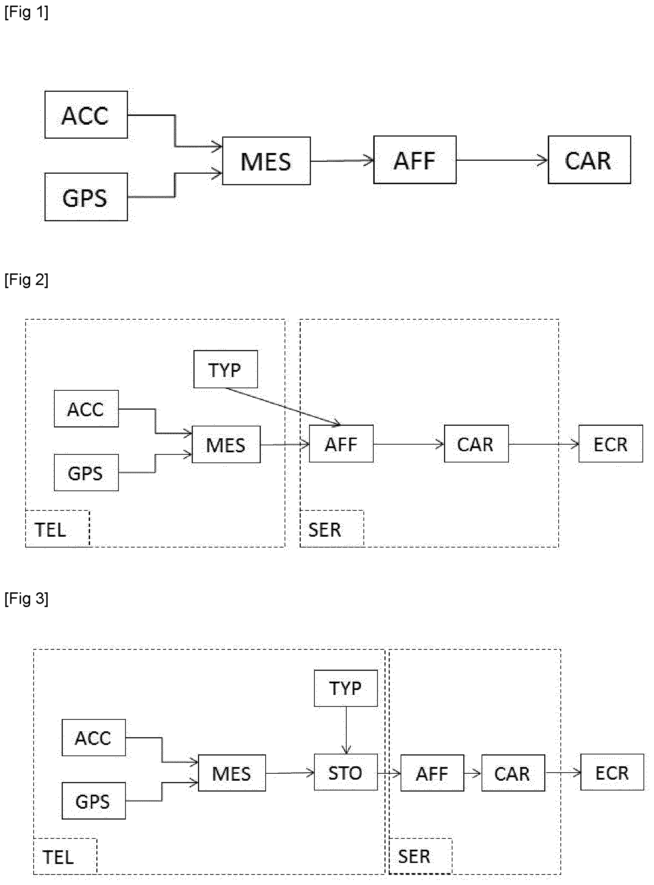

La figure 1 illustre, schématiquement et de manière non limitative, les étapes du procédé selon un premier mode de réalisation de l'invention. Un accéléromètre trois axes ACC et un capteur de géolocalisation GPS sont utilisés pour réaliser les mesures MES de l'accélération, de la position et de la vitesse de l'usager de la route. Ensuite, on détermine les vibrations engendrées par les aspérités de la route, en s'affranchissant AFF pour les mesures d'accélération de l'effet de la vitesse de déplacement de l'usager, la vitesse étant celle mesurée par le capteur de géolocalisation. Les vibrations déterminées sont ensuite utilisées pour caractériser l'état de la route CAR.

Selon un mode de réalisation de l'invention, le procédé de caractérisation de l'état de la route peut comporter les étapes suivantes :
1) Mesures de l'accélération, de la position et de la vitesse
2a) Détermination du type d'usager du véhicule
2) Détermination des vibrations
3) Caractérisation de l'état de la route
4) Affichage de la caractérisation de l'état de la route

Ces étapes peuvent être mises en œuvre par des moyens informatiques. Selon un exemple de réalisation, les étapes 1) et 2a) peuvent être réalisées au moyen d'un téléphone intelligent, et les étapes 2), et 3) peuvent être mises en œuvres au moyen d'un système informatique comprenant un serveur, celui-ci pouvant être dans un nuage informatique (de l'anglais « cloud »). Cette configuration permet de se libérer des contraintes de faible puissance de calcul des téléphones intelligents. Les étapes seront détaillées dans la suite de la description.

L'étape 1) est réalisée de manière continue pendant le trajet de l'usager de la route. Les étapes 2) à 4) peuvent être réalisées de préférence après le trajet de l'usager de la route.

Les étapes 2a) et 4) sont indépendantes; par conséquent seule une de ces étapes peut être mise en œuvre dans une variante de réalisation de l'invention.

La figure 2 illustre, schématiquement et de manière non limitative, les étapes du procédé selon un mode de réalisation l'invention. Un accéléromètre trois axes ACC et un capteur de géolocalisation GPS sont utilisés pour réaliser les mesures MES de l'accélération, de la position et de la vitesse de l'usager de la route. Ces mesures sont mises en œuvre sur un téléphone intelligent TEL. Ensuite, on détermine les vibrations engendrées par les aspérités de la route, en s'affranchissant AFF pour les mesures d'accélération de l'effet de la vitesse de déplacement de l'usager, la vitesse étant celle mesurée (et éventuellement traitées) par le capteur de géolocalisation. Pour cette étape, on se sert d'une information relative au type d'usager TYP par exemple : bicyclette, véhicule automobile ou deux-roues. Les vibrations déterminées sont ensuite utilisées pour caractériser l'état de la route CAR. Ces étapes sont mises en œuvre sur un serveur informatique SER en communication avec le téléphone intelligent. Cette caractérisation de la route est alors affichée ECR, par exemple sur un écran.

Selon un mode de réalisation de l'invention, le procédé de caractérisation de l'état de la route peut comporter les étapes suivantes :
1) Mesures de l'accélération, de la position et de la vitesse
2a) Détermination du type d'usager du véhicule
2b) Stockage des mesures
2) Détermination des vibrations
3) Caractérisation de l'état de l'état de la route
4) Affichage de la caractérisation de la route

Ces étapes peuvent être mises en œuvre par des moyens informatiques. Selon un exemple de réalisation, les étapes 1), 2a) et 2b) peut être réalisée au moyen d'un téléphone intelligent, et les étapes 2), et 3) peuvent être mises en œuvres au moyen d'un système informatique comprenant un serveur, celui-ci pouvant être dans un nuage informatique (de l'anglais « cloud »). Cette configuration permet de se libérer des contraintes de faible puissance de calcul des téléphones intelligents. Les étapes seront détaillées dans la suite de la description.

Les étapes 2a), 2b) et 4) sont indépendantes; par conséquent seule une de ces étapes ou toute combinaison de ces étapes peut être mise en œuvre dans une variante de réalisation de l'invention.

L'étape 1) est réalisée de manière continue pendant le trajet de l'usager de la route. Les étapes 2) à 4) peuvent être réalisées de préférence après le trajet de l'usager de la route.

L'étape 3a) est particulièrement adaptée lorsqu'on souhaite caractériser l'état de la route pour plusieurs trajets et/ou plusieurs usagers de la route.

La figure 3 illustre, schématiquement et de manière non limitative, les étapes du procédé selon un mode de réalisation l'invention. Un accéléromètre trois axes ACC et un capteur de géolocalisation GPS sont utilisés pour réaliser les mesures MES de l'accélération, de la position et de la vitesse de l'usager de la route. Ces mesures sont mises en œuvre sur un téléphone intelligent TEL. Ensuite, on stocke STO les vibrations déterminées dans un moyen de stockage. Puis, on détermine les vibrations engendrées par les aspérités de la route, en s'affranchissant AFF pour les mesures d'accélération de l'effet de la vitesse de déplacement de l'usager, la vitesse étant celle mesurée par le capteur de géolocalisation. Pour cette étape, on se sert d'une information relative au type de véhicule de l'usager de la route TYP par exemple : bicyclette, véhicule automobile ou deux-roues. L'information relative au type de véhicule de l'usager de la route TYP peut également être stockées STO dans un moyen de stockage. Les vibrations déterminées d'un ou plusieurs trajets et/ou d'un ou plusieurs usagers sont ensuite utilisées pour caractériser l'état de la route CAR. Ces étapes sont mises en œuvre sur un serveur informatique SER en communication avec le téléphone intelligent. Cette caractérisation de la route est alors affichée ECR, par exemple sur un écran.

### 1) Mesures de l'accélération, de la position et la vitesse

Lors de cette étape, pendant le trajet du véhicule, on mesure l'accélération de l'usager de la route au moyen de l'accéléromètre trois axes, ainsi que la position et la vitesse de l'usager de la route au moyen du capteur de géolocalisation.

Pour le mode de réalisation pour lequel l'accéléromètre trois axes est intégré dans un téléphone intelligent, les vibrations du téléphone intelligent engendrées par une chaussée de mauvaise qualité peut présenter des composantes de fréquence supérieures à la fréquence d'échantillonnage du capteur (accéléromètre). Par ailleurs, cette fréquence d'échantillonnage peut dépendre du modèle du téléphone intelligent. Qui plus est, elle peut généralement être fluctuante. Selon le type de téléphone, les mesures peuvent être fréquemment saturées...

Selon un exemple non limitatif, l'échantillonnage de l'accéléromètre peut être compris entre 100 et 500Hz.

L'échantillonnage des mesures de l'accélération peut être vu comme une succession de réalisations de variables aléatoires indépendantes et identiquement distribuées sur des fenêtres de l'ordre de 0.1s. L'intégralité de l'information contenue dans ces réalisations est synthétisée par la fonction de répartition jointe empirique de ces trois variables aléatoires.

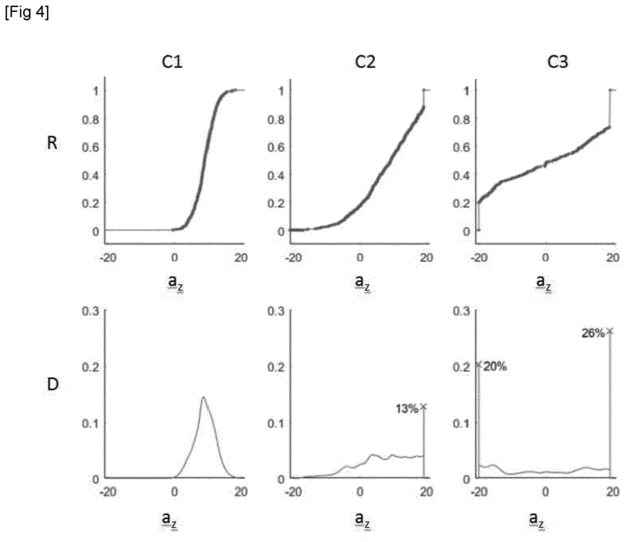

A titre d'exemple, la figure 4 représente les fonctions de répartition R empiriques des mesures d'accélération a_{z} à une seule dimension, projetées sur un axe vertical z, et les densités D de probabilité associées pour trois tronçons de route C1, C2, C3 caractérisés par des états de route différents.

Le tronçon C1 présente une fonction de répartition continue, centrée autour d'une médiane 9.2, qui correspond sensiblement à l'accélération de la gravité 9.8 m/s². Le tronçon C1 présente un bon état de route.

Le tronçon C2 correspond à une situation durant laquelle l'usager de la route subit d'avantage de vibrations, à tel point que 13% des mesures sont égales à 20m/s², soit la saturation de l'accéléromètre trois axes de l'exemple.

Le tronçon C3 est extrêmement chaotique : le capteur est saturé sur 46% des mesures.

Plus la surface de la route est irrégulière, plus la distribution des mesures est dispersée autour de la valeur centrale correspondant à l'accélération de la gravité g=9.8 m/s². L'écart type de la distribution permet alors de caractériser cette distribution.

### 2a) Détermination du type d'usager du véhicule

Lors de cette étape facultative, on détermine le type de véhicule utilisé par l'usager de la route, par exemple : une bicyclette, un véhicule automobile, ou un deux-roues motorisé ou tout moyen analogue. Cette étape permet d'améliorer l'étape de détermination des vibrations en fonction du type d'usager, de manière à optimiser la caractérisation de la route.

Cette détermination peut être réalisée manuellement : il peut s'agir d'une information donnée par l'utilisateur.

Alternativement, le procédé peut déterminer automatiquement le type de véhicule de l'usager de la route, par analyse de la vitesse et du déplacement du véhicule.

Selon un exemple de réalisation, la détermination du type de véhicule de l'usager du véhicule peut être réalisé sur ou par un téléphone intelligent et peut être envoyé sur un serveur informatique stockant cette information et mettant en œuvre les étapes suivantes.

### 2b) Stockage des mesures

Lors de cette étape optionnelle, on stocke les mesures issues de l'accéléromètre ainsi que leur géolocalisation, dans une base de données d'un système informatique, sans identification de la position verticale des capteurs (et le cas échéant du téléphone intelligent). Selon un exemple de réalisation, cette base de données peut être enregistrée sur un téléphone intelligent, le cas échéant celui qui met en œuvre les étapes 1) et 2).

Les données stockées peuvent ensuite être envoyées par communication mobile à un serveur informatique qui réalise les étapes 2) et 3) (et éventuellement 4)).

Selon un mode de réalisation de l'invention, on peut stocker les mesures par agrégation des mesures pour une fenêtre temporelle prédéfinie. Cette fenêtre temporelle prédéfinie peut être comprise entre 0.05 s et 0.25 s, et peut valoir de préférence 0.1s, c'est-à-dire à une fréquence comprise entre 4 et 20 Hz, et valant de préférence 10 Hz. Les données agrégées dans cette fenêtre temporelle prédéfinie peuvent comporter au moins une composante : une information de position moyenne constituée des trois moyennes des mesures d'accélération sur les trois axes de l'accéléromètre, et une information de vibration qui est la somme des trois variances des mesures des accélérations sur les trois axes de l'accéléromètre. Sur la fenêtre temporelle prédéterminée, l'information de vibration est presque insensible aux mouvements de l'usager, on peut alors parler d'isotropie des mesures (indépendance de la détermination de l'état de la route et de la position de l'accéléromètre trois axes). En particulier ce critère est peu affecté par la saturation de l'accéléromètre, rendant ainsi la détermination de l'état de la route robuste et fiable, pour tout type d'usager de la route, en particulier le cycliste. De plus, la simplicité de méthode permet de rendre robuste l'agrégation des données, en limitant l'impact des aspects imprévisibles de son exécution par un téléphone intelligent (par exemple : problème de temporalité du processeur du téléphone intelligent, écriture et lecture des paquets de données envoyés au serveur, etc.). Cette agrégation des mesures sur la fenêtre temporelle prédéfinie permet également, le cas échéant, de limiter le volume de données échangé entre le téléphone intelligent et le serveur informatique.

### 2) Détermination des vibrations

Lors de cette étape, on détermine les vibrations engendrées par les aspérités de la route à partir des mesures de géolocalisation. Dans ce but, on s'affranchit des effets liés à la vitesse de déplacement de l'usager de la route. Ainsi, cet affranchissement des effets de la vitesse permet de prendre en compte uniquement les conditions normales de déplacement de l'usager de la route, ce qui permet de rendre fiable la détermination de l'état de la route.

En effet, la vitesse de l'usager de la route a une forte influence sur l'intensité du critère de vibration, et n'a pas de lien avec l'état de la route. Dans ce but, lors de cette étape, on traite le signal issu de l'accéléromètre trois axes afin de présenter une invariance par changement de vitesse de l'usager pour ne dépendre que de l'état de la route, cette vitesse étant mesurée par le capteur de géolocalisation. Différents traitements (méthode d'affranchissement) peuvent être mis en œuvre pour la réalisation de cette étape.

Selon un aspect de l'invention, l'affranchissement des effets de la vitesse peut être différent en fonction du type d'usager de la route. Ainsi, l'affranchissement est plus adapté au type d'usager de la route, ce qui augmente la précision de la caractérisation de la route.

Selon une première variante, lorsque l'usager de la route utilise une bicyclette, on peut déterminer les vibrations en conservant les mesures d'accélération pour une plage de vitesse prédéfinie. Par exemple la plage de vitesse prédéfinie peut être comprise entre 15 et 30 km/h, de préférence entre 16 et 26 km/h. Sur cette plage étroite, on estime que l'on peut négliger l'influence de la vitesse sur l'intensité des vibrations mesurées. Cette méthode présente en outre l'avantage d'être facilement mise en œuvre. De plus, la suppression des basses vitesses permet d'éviter de prendre en compte les comportements particuliers lorsque les bicyclettes roulent lentement : par exemple pour éviter les véhicules à l'arrêt, pour changer de voie, pour monter ou descendre d'un trottoir, pour arrêter la bicyclette, etc.

Selon une deuxième variante, lorsque l'usager de la route utilise un véhicule automobile ou un deux-roues motorisé, on peut déterminer les vibrations par division des mesures d'accélération par une ligne de base fonction de la vitesse de l'usager de la route. En d'autres termes, on peut soustraire le logarithme de la ligne de base de la vitesse aux logarithmes des mesures d'accélération. Cette ligne de base peut être apprise en fonction du ou des trajets parcours par l'usager de la route. En d'autres termes, la ligne de base peut être obtenue au moyen des mesures de vitesse de l'usager de la route. En effet, pour ces types d'usager de la route, on peut construire une fonction de deux paramètres : vitesse et vibrations restituant un critère de vibration qui soit invariant par changement de vitesse.

### 3) Caractérisation de l'état de la route

Il s'agit de déterminer l'état de la route en fonction des vibrations déterminées. En d'autres termes, les vibrations déterminées à l'étape 2) sont représentatives de l'état de la route. C'est pourquoi, l'analyse des vibrations et leur géolocalisation permet de déduire l'état de la route.

Selon un aspect de l'invention, l'état de la route peut être une note définie de telle sorte que si la note est élevée, la route présente de nombreuses aspérités (route de mauvaise qualité), et si la note est faible la route présente peu d'aspérités (route de bonne qualité). De manière avantageuse, on peut attribuer la note de caractérisation de l'état de la route, par comparaison des vibrations déterminées à l'étape précédente avec au moins un seuil prédéfini.

Selon un mode de réalisation, on peut caractériser l'état de la route par tronçon de la route. On appelle tronçon de route une portion de route entre deux intersections consécutives. Ce mode de réalisation est particulièrement avantageux, car l'état de route est généralement constant ou sensiblement constant sur un tronçon de route. Ainsi, on peut déterminer de manière précise et rapide un état de la route.

De préférence, on peut caractériser l'état de la route pour un tronçon de route, par analyse de la distribution des vibrations déterminées à l'étape précédente. De manière avantageuse, la distribution des vibrations déterminées peut être comparée à des distributions théoriques pour en déduire l'état de la route. On peut par exemple comparer la moyenne de la distribution des vibrations déterminées à au moins un seuil prédéfini.

Conformément à un mode de réalisation, on peut déterminer l'état de la route pour un trajet parcouru par un usager de la route. Ce mode de réalisation permet d'avoir une caractérisation de l'état de la route avec un minimum de mesures.

Alternativement, on peut déterminer l'état de la route en répétant les étapes 1) à 3a) pour plusieurs trajets parcourus et/ou pour plusieurs usagers de la route. Ce mode de réalisation permet de caractériser l'état de la route avec une pluralité de mesures, ce qui permet de caractériser l'état de la route de manière précise. Et surtout de remettre les différentes mesures sur une même échelle, de faire comme si l'on avait qu'un seul trajet parcourant tous les tronçons.

Pour ce mode de réalisation, on peut caractériser l'état de la route, pour chaque tronçon commun parcouru par fusion des vibrations déterminées pour les différents trajets. Selon une caractéristique de l'invention, afin de réaliser la fusion des vibrations déterminées pour les différents trajets, on peut réaliser une étape de calibration des trajets. Dans ce cas, on peut réaliser cette calibration par la résolution d'un problème d'optimisation sous contrainte. Par exemple, la fonction coût peut correspondre à la somme, pondérée par le nombre de trajets parcourant les tronçons de route et par leur longueur, des variances (entre les trajets) des qualités normalisés de ces tronçons de route.

Selon un mode de réalisation de l'invention, on peut utiliser aussi les vibrations déterminées (pour un ou plusieurs trajets) pour déterminer la position des aspérités de la route, par exemple des nids de poule, sur la route, au moyen des mesures de géolocalisation. Pour ce mode de réalisation, lorsque l'état de la route est caractérisé pour une pluralité de trajets, on peut également déterminer un paramètre relatif au pourcentage d'usagers ayant réussi à éviter l'aspérité. Ainsi, ce paramètre donne une information supplémentaire pour assurer la sécurité et le confort de l'usager de la route.

Dans la suite de cette partie, on décrit un exemple de mise en œuvre de cette étape, pour le mode de réalisation pour lequel on caractérise l'état de la route à partir de plusieurs trajets et plusieurs usagers de la route, ces usagers de la route étant pour l'exemple des bicyclettes.

L'hétérogénéité des bicyclettes, des cyclistes, des capteurs de géolocalisation, des accéléromètres trois axes, et du type de couplages mécaniques les reliant (capteurs sur le guidon, dans une poche du cycliste, dans un sac, etc.) peut ne pas permettre de considérer les vibrations déterminées de manière absolue : les distributions des vibrations déterminées peuvent différer entre chaque trajet. Dans ce cas, une étape de calibration inter-trajets peut être mise en œuvre. Cette étape de calibration est indépendante de l'ordre chronologique de réalisation des trajets sur des durées pendant lesquelles l'état de la route varie peu, grâce à une pondération similaire des trajets (proches dans le temps), et à une méthode de calibration non séquentielle. De préférence, la calibration desdits trajets peut être une méthode d'optimisation symétrique par ordre chronologique de réalisation desdits trajets. On peut réaliser cette optimisation au moyen d'une fonction de coût (appelée également fonction objectif). La fonction de coût permet de définir un facteur de proportionnalité propre à chaque trajet. On appelle fonction d'optimisation symétrique une fonction insensible à l'ordre chronologique de réalisation des trajets (proches dans le temps).

Pour cela, on suppose que si un usager roule sur deux tronçons de même qualité de route au cours d'un même trajet, alors les mesures sont quasiment identiques (cette hypothèse est expérimentalement vérifiée si les capteurs - en particulier l'accéléromètre trois axes - ne changent pas de position pendant le trajet). Sous cette hypothèse, les vibrations déterminées lors d'un unique trajet offrent une relation d'ordre de la qualité des tronçons de route qui est correcte. On peut émettre l'hypothèse que les mesures ne diffèrent que par un facteur de proportionnalité propre à chaque trajet. L'obtention de ces facteurs de proportionnalité permet d'attribuer à chaque couple tronçon/trajet un critère de qualité normalisé. Ces critères exprimés à la même échelle, peuvent être moyennés entre trajets et par tronçon de route. Même si les mesures ne sont pas strictement proportionnelles entre les trajets, cette approche simple est légitime pour obtenir la relation d'ordre des qualités des tronçons de route. Ces facteurs de proportionnalité ne sont pas absolus : ils ne peuvent être déterminés que relativement aux mesures fournies lors d'autres trajets. La détermination de ces facteurs de proportionnalité permet de calibrer les vibrations.

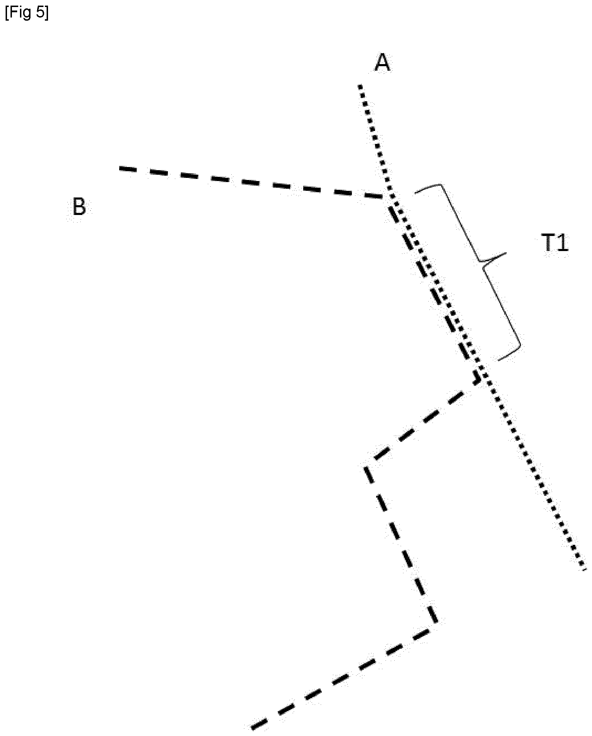

La figure 5 présente un exemple de deux trajets A et B partageant un même tronçon de route T1. Le trajet A est représenté par des pointillés, et le trajet B est représenté par des tirets. Dans ce cas, les deux facteurs de proportionnalité peuvent être déterminés de manière aisée, de telle sorte que les deux trajets fournissent la même mesure de qualité sur le tronçon de route T1. Selon un exemple non limitatif, on peut définir que la moyenne de la qualité de route des tronçons soit égale à 1. Dans ces conditions les deux facteurs existent et sont uniques.

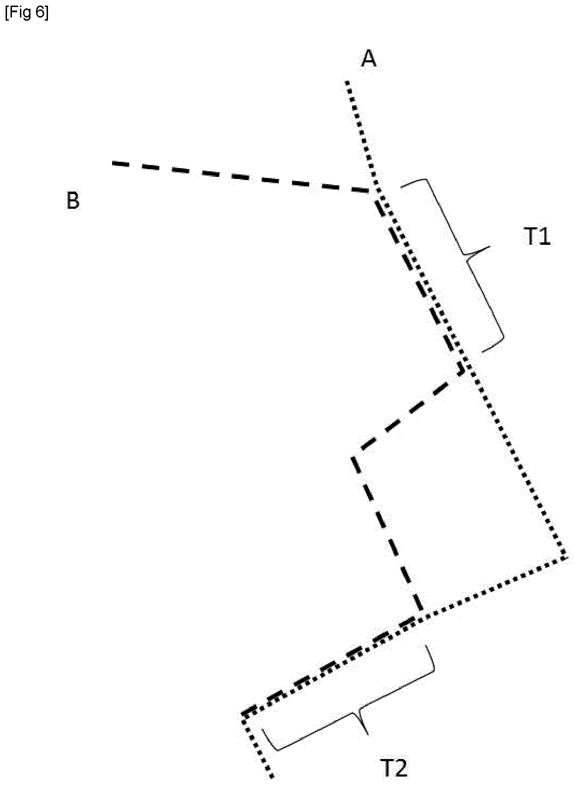

La figure 6 présente un exemple de deux trajets A et B partageant deux tronçons de route T1 et T2. Le trajet A est représenté par des pointillés, et le trajet B est représenté par des tirets. Dans ce cas, l'égalité des mesures ne peut pas être assurée (2 facteurs de proportionnalité inconnus pour deux contraintes d'égalité des critères de qualité des tronçons T1 et T2 et une contrainte d'égalité moyenne égale à 1). On pose alors une fonction coût à minimiser, et dont l'optimisation permet de déterminer une paire de facteur de proportionnalité la plus cohérente possible.

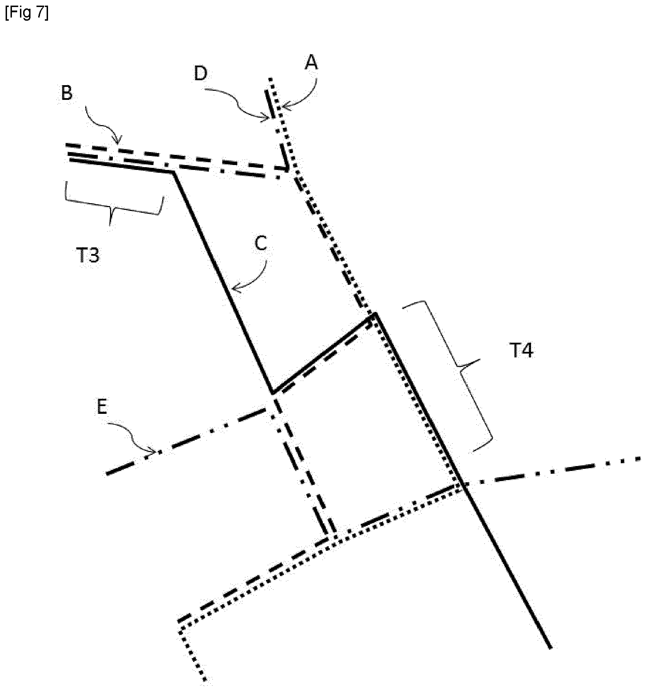

La figure 7 présente un exemple de 5 trajets A, B, C, D, E partageant de nombreux tronçons de route (parmi lesquels les tronçons T3 et T4). Le trajet A est représenté par des pointillés, le trajet B est représenté par des tirets, le trajet C par une ligne continue, le trajet D par une alternance de points et de tirets, et le trajet E par une alternance de deux points et un tiret. Il peut s'agir d'une configuration générale d'une partie d'un réseau routier. Par exemple, le tronçon T3 a été parcouru par les trajets B , C et D, et le tronçon T4 a été parcouru par les trajets A et C. Une fonction coût (pouvant correspondre à la somme, pondérée par le nombre de trajets parcourant les tronçons de route et par leur longueur, des variances entre les trajets des qualités normalisés de ces tronçons de route) permet de trouver les facteurs de proportionnalité des mesures de chaque trajet, l'optimisation s'effectuant séparément sur chacun des graphes connexes (deux graphes non connexes ne peuvent pas avoir d'influence l'un sur l'autre lors du processus d'optimisation de la fonction coût).

### 4) Affichage de la caractérisation de l'état de la route

Lors de cette étape facultative, on affiche l'état de la route sur une carte routière. Cet affichage peut prendre la forme d'une note ou d'un code couleur. Le cas échéant, une note ou une couleur peut être associée à chaque tronçon de route qui a été parcouru. Cet affichage peut être réalisé à bord du véhicule : sur le tableau de bord, sur un dispositif portatif autonome, tel qu'un appareil de géolocalisation (de type GPS), un téléphone portable (de type téléphone intelligent). Il est également possible d'afficher l'état de la route sur un site internet, que l'utilisateur peut consulter postérieurement à sa conduite. De plus, l'état de la route caractérisé peut être partagé avec les pouvoirs publics (par exemple gestionnaire de la voirie) et les entreprises de travaux publics. Ainsi, les pouvoirs publics et les entreprises de travaux publics peuvent déterminer les routes (le cas échéant les tronçons de route) nécessitant une maintenance. Dans un tel cas d'application, la caractérisation de la route peut être liée à une information relative à la fréquentation de la route, cette fréquentation de la route peut être déterminée au moyen du procédé selon l'invention en déterminant le nombre de trajets parcourant la route (le cas échant le tronçon de route) considéré.

Selon un mode de réalisation, on peut également afficher sur la carte routière la position des aspérités de la route, par exemple des nids de poule.

En outre, l'invention concerne un procédé de détermination d'un trajet à parcourir par un utilisateur, pour lequel on identifie le départ et l'arrivée, en mettant en œuvre les étapes suivantes :
a) On caractérise l'état de la route au moyen du procédé de caractérisation de l'état d'une route selon l'une quelconque des variantes ou des combinaisons de variantes décrites précédemment, pour au moins un trajet passé,
b) On détermine un trajet à parcourir pour relier le départ et l'arrivée, en minimisant la circulation sur les tronçons de route ayant un état de route élevé, ou en d'autres termes, en fonction d'un seuil prédéterminé relatif à l'état de la route.

L'étape b) peut minimiser également d'autres critères classiques des procédé de navigation : tels que le temps de trajet, la distance parcourue, l'énergie consommée, etc.

Pour l'étape b), on peut mettre en œuvre un algorithme de plus court chemin, dont la pondération dépend notamment de l'état de la route.

Ce procédé permet d'améliorer le confort et la sécurité de l'usager de la route, en particulier quand il s'agit d'une bicyclette ou d'un deux-roues motorisé.

## Revendications

1. Procédé de caractérisation de l'état d'une route lors d'un trajet parcouru par un usager de ladite route utilisant un véhicule, au moyen d'un accéléromètre trois axes et d'un capteur de géolocalisation, le procédé mettant en œuvre les étapes suivantes :
a) Pendant ledit trajet, on mesure (MES) l'accélération dudit usager de la route selon les trois axes au moyen dudit accéléromètre trois axes (ACC) et on mesure la position et la vitesse dudit usager de la route au moyen dudit capteur de géolocalisation (GPS) ;
b) On détermine des vibrations engendrées par les aspérités de ladite route en s'affranchissant (AFF) pour lesdites mesures d'accélération de l'effet de la vitesse de déplacement dudit usager de la route de la manière suivante :
i) lorsque ledit usager de la route utilise une bicyclette, on détermine lesdites vibrations au moyen desdites mesures d'accélération pour une plage de vitesse prédéterminée ;
ii) lorsque ledit usager de la route utilise un véhicule automobile ou un deux-roues motorisé, on détermine lesdites vibrations par division desdites mesures d'accélération par une ligne de base fonction de la vitesse dudit usager de la route ; et
c) On caractérise (CAR) l'état de la route par une analyse desdites vibrations déterminées.

2. Procédé de caractérisation de l'état d'une route selon la revendication 1, dans lequel ledit accéléromètre trois axes (ACC) et ledit capteur de géolocalisation (GPS) sont intégrés dans un téléphone intelligent (TEL).

3. Procédé de caractérisation de l'état d'une route selon l'une des revendications précédentes, dans lequel ladite plage de vitesse prédéterminée est comprise entre 15 et 30 km/h, et de préférence entre 16 et 26 km/h.

4. Procédé de caractérisation de l'état d'une route selon l'une des revendications précédentes, dans lequel ladite ligne de base est obtenue au moyen des mesures dudit trajet dudit usager de la route.

5. Procédé de caractérisation de l'état d'une route selon l'une des revendications précédentes, dans lequel on caractérise (CAR) l'état de la route par tronçon de route dudit trajet.

6. Procédé de caractérisation de l'état d'une route selon la revendication 5, dans lequel on caractérise (CAR) l'état de la route au moyen d'une distribution desdites vibrations déterminées sur chaque tronçon de route dudit trajet.

7. Procédé de caractérisation de l'état d'une route selon l'une des revendications 5 ou 6, dans lequel on répète les étapes a) et b) pour une pluralité de trajets et/ou pour une pluralité d'usagers de ladite route, et pour chaque tronçon de route commun parcouru, on caractérise (CAR) l'état de la route par fusion desdites vibrations déterminées pour ladite pluralité de trajets.

8. Procédé de caractérisation de l'état d'une route selon la revendication 7, dans lequel on réalise ladite fusion des vibrations déterminées par une calibration desdits trajets, de préférence la calibration desdits trajets est une méthode d'optimisation symétrique par ordre chronologique de réalisation desdites trajets.

9. Procédé de caractérisation de l'état de la route selon l'une des revendications précédentes, dans lequel on stocke (STO) lesdites mesures dans une base de données.

10. Procédé de caractérisation de l'état de la route selon la revendication 9, dans lequel on stocke (STO) lesdites mesures par agrégation des mesures pour une fenêtre temporelle prédéfinie, ladite fenêtre temporelle prédéfinie étant de préférence comprise entre 0.05s et 0.25s.

11. Procédé de caractérisation de l'état de la route selon la revendication 10, dans lequel lesdites données agrégées dans ladite fenêtre temporelle prédéfinie comportent au moins une composante : une composante de vibration correspondant à la somme des trois variances des mesures des accélérations sur les trois axes dudit accéléromètre trois axes.

12. Procédé de caractérisation de l'état de la route selon l'une des revendications précédentes, dans lequel on détermine ledit véhicule au moyen desdites mesures (MES).

13. Procédé de caractérisation de l'état d'une route selon l'une des revendications précédentes, dans lequel on affiche (ECR) ladite caractérisation de l'état de la route sur une carte routière, de préférence au moyen d'un téléphone intelligent, ou d'un système informatique.

## Patentansprüche

1. Verfahren zur Charakterisierung des Zustands einer Fahrbahn während des Zurücklegens einer Fahrstrecke durch einen Benutzer der Fahrbahn unter Verwendung eines Fahrzeugs, mit Hilfe eines Drei-Achsen-Beschleunigungsmessers und eines Geolokalisierungssensors, wobei das Verfahren die folgenden Schritte umsetzt:
a) während des Zurücklegens der Fahrstrecke, Messen (MES) der Beschleunigung des Benutzers der Fahrbahn gemäß den drei Achsen mit Hilfe des Drei-Achsen-Beschleunigungsmessers (ACC) und Messen der Position und der Geschwindigkeit des Benutzers der Fahrbahn mit Hilfe des Geolokalisierungssensors (GPS);
b) Bestimmen der durch die Unebenheiten der Fahrbahn erzeugten Vibrationen, indem aus den Beschleunigungsmessungen der Effekt der Bewegungsgeschwindigkeit des Benutzers der Fahrbahn folgendermaßen herausgerechnet (AFF) wird:
i) wenn der Benutzer der Fahrbahn ein Fahrrad benutzt, Bestimmen der Vibrationen mit Hilfe der Beschleunigungsmessungen für einen vorgegebenen Geschwindigkeitsbereich;
ii) wenn der Benutzer der Fahrbahn ein Kraftfahrzeug oder ein motorisiertes Zweirad benutzt, Bestimmen der Vibrationen durch Dividieren der Beschleunigungsmessungen durch eine Basislinie, die von der Geschwindigkeit des Benutzers der Fahrbahn abhängt; und
c) Charakterisieren (CAR) des Zustands der Fahrbahn durch eine Analyse der bestimmten Vibrationen.

2. Verfahren zur Charakterisierung des Zustands einer Fahrbahn nach Anspruch 1, wobei der Drei-Achsen-Beschleunigungsmesser (ACC) und der Geolokalisierungssensor (GPS) in ein Smartphone (TEL) integriert sind.

3. Verfahren zur Charakterisierung des Zustands einer Fahrbahn nach einem der vorhergehenden Ansprüche, wobei der vorgegebene Geschwindigkeitsbereich zwischen 15 und 30 km/h und vorzugsweise zwischen 16 und 26 km/h liegt.

4. Verfahren zur Charakterisierung des Zustands einer Fahrbahn nach einem der vorhergehenden Ansprüche, wobei die Basislinie mit Hilfe der Messungen der Fahrstrecke des Benutzers der Fahrbahn erhalten wird.

5. Verfahren zur Charakterisierung des Zustands einer Fahrbahn nach einem der vorhergehenden Ansprüche, wobei der Zustand der Fahrbahn pro Fahrbahnabschnitt der Fahrstrecke charakterisiert (CAR) wird.

6. Verfahren zur Charakterisierung des Zustands einer Fahrbahn nach Anspruch 5, wobei der Zustand der Fahrbahn mit Hilfe einer Verteilung der bestimmten Vibrationen auf jedem Fahrbahnabschnitt der Fahrstrecke charakterisiert (CAR) wird.

7. Verfahren zur Charakterisierung des Zustands einer Fahrbahn nach einem der Ansprüche 5 oder 6, wobei die Schritte a) und b) für eine Vielzahl von Fahrstrecken und/oder für eine Vielzahl von Benutzern der Fahrbahn wiederholt werden und für jeden zurückgelegten gemeinsamen Fahrbahnabschnitt der Zustand der Fahrbahn durch Zusammenführen der für die Vielzahl von Fahrstrecken bestimmten Vibrationen charakterisiert (CAR) wird.

8. Verfahren zur Charakterisierung des Zustands einer Fahrbahn nach Anspruch 7, wobei das Zusammenführen der bestimmten Vibrationen durch eine Kalibrierung der Fahrstrecken durchgeführt wird, wobei die Kalibrierung der Fahrstrecken vorzugsweise ein Verfahren zur symmetrischen Optimierung in chronologischer Reihenfolge der Durchführung der Fahrstrecken ist.

9. Verfahren zur Charakterisierung des Zustands einer Fahrbahn nach einem der vorhergehenden Ansprüche, wobei die Messungen in einer Datenbank gespeichert (STO) werden.

10. Verfahren zur Charakterisierung des Zustands einer Fahrbahn nach Anspruch 9, wobei die Messungen durch Zusammenlegen der Messungen für ein vordefiniertes Zeitfenster gespeichert (STO) werden, wobei das vordefinierte Zeitfenster vorzugsweise zwischen 0,05 s und 0,25 s liegt.

11. Verfahren zur Charakterisierung des Zustands einer Fahrbahn nach Anspruch 10, wobei die in dem vordefinierten Zeitfenster zusammengelegten Daten mindestens eine Komponente umfassen: eine Vibrationskomponente, die der Summe der drei Varianzen der Messungen der Beschleunigungen in den drei Achsen des Drei-Achse-Beschleunigungsmessers entspricht.

12. Verfahren zur Charakterisierung des Zustands einer Fahrbahn nach einem der vorhergehenden Ansprüche, wobei das Fahrzeug mit Hilfe der Messungen (MES) bestimmt wird.

13. Verfahren zur Charakterisierung des Zustands einer Fahrbahn nach einem der vorhergehenden Ansprüche, wobei die Charakterisierung des Zustands der Fahrbahn auf einer Straßenkarte angezeigt (ECR) wird, vorzugsweise mit Hilfe eines Smartphones oder eines Computersystems.

## Claims

1. Method for characterizing the state of a road during a journey travelled by a user of said road using a vehicle, by means of a three-axis accelerometer and of a geo-positioning system, the method implementing the following steps:
a) during said journey, the acceleration of said road user along three axes is measured (MES) by means of said three-axis accelerometer (ACC) and the position and speed of said road user are measured by means of said geo-positioning system (GPS);
b) vibrations engendered by asperities of said road are determined by removing (AFF) from said acceleration measurements the effect of the speed of movement of said road user in the following way:
i) when said road user is using a bicycle, said vibrations are determined by means of said acceleration measurements for a predetermined speed range;
ii) when said road user is using a motor vehicle or a motorized two-wheeler, said vibrations are determined by dividing said acceleration measurements by a baseline dependent on the speed of said road user; and
c) the state of the road is characterized (CAR) via an analysis of said determined vibrations.

2. Method for characterizing the state of a road according to Claim 1, wherein said three-axis accelerometer (ACC) and said geo-positioning system (GPS) are integrated into a smartphone (TEL).

3. Method for characterizing the state of a road according to one of the preceding claims, wherein said predetermined speed range is comprised between 15 and 30 km/h, and preferably between 16 and 26 km/h.

4. Method for characterizing the state of a road according to one of the preceding claims, wherein said baseline is obtained by means of measurements of said journey of said road user.

5. Method for characterizing the state of a road according to one of the preceding claims, wherein the state of the road is characterized (CAR) per segment of road of said journey.

6. Method for characterizing the state of a road according to Claim 5, wherein the state of the road is characterized (CAR) by means of a distribution of said determined vibrations on each segment of road of said journey.

7. Method for characterizing the state of a road according to either of Claims 5 and 6, wherein steps a) and b) are repeated for a plurality of journeys and/or for a plurality of users of said road, and for each common segment of road travelled, the state of the road is characterized (CAR) by fusing said vibrations determined for said plurality of journeys.

8. Method for characterizing the state of a road according to Claim 7, wherein said determined vibrations are fused via a calibration of said journeys, the calibration of said journeys preferably being a method of symmetric optimization by chronological order of said journeys.

9. Method for characterizing road state according to one of the preceding claims, wherein said measurements are stored (STO) in a database.

10. Method for characterizing road state according to Claim 9, wherein said measurements are stored (STO) by aggregating measurements in a predefined time window, said predefined time window preferably being comprised between 0.05 s and 0.25 s.

11. Method for characterizing road state according to Claim 10, wherein said data aggregated in said predefined time window comprise at least one component: a vibration component corresponding to the sum of the three variances of the measurements of the accelerations on the three axes of said three-axis accelerometer.

12. Method for characterizing road state according to one of the preceding claims, wherein said vehicle is determined by means of said measurements (MES).

13. Method for characterizing road state according to one of the preceding claims, wherein said characterization of road state is displayed (ECR) on a road map, preferably by means of a smartphone, or by means of a computer system.
